# EUROPÄISCHE PATENTSCHRIFT

(11) **EP 3 516 463 B1**
(45) Veröffentlichungstag und Bekanntmachung des Hinweises auf die Patenterteilung: **20.04.2022**
(21) Anmeldenummer: 17764800.3
(22) Anmeldetag: 06.09.2017
(51) Int. Cl.: G05B 19/042

(54) **SYSTEM ZUM DIAGNOSTIZIEREN EINES PROZESSFLUIDFÜHRENDEN STELLGERÄTS UND ENTSPRECHENDES VERFAHREN**
SYSTEM FOR DIAGNOSING A PROCESS FLUID-CONDUCTING ACTUATOR AND CORRESPONDING METHOD
SYSTÈME PERMETTANT DE DIAGNOSTIQUER UN APPAREIL DE RÉGLAGE ACHEMINANT UN FLUIDE DE TRAITEMENT, ET PROCÉDÉ RESPECTIF

(30) Priorität: 21.09.2016 DE 102016117813
(43) Veröffentlichungstag der Anmeldung: 31.07.2019
(73) Patentinhaber: Samson Aktiengesellschaft, 60314 Frankfurt am Main (DE)
(72) Erfinder: KIESBAUER, Jörg, 64859 Eppertshausen (DE)
(74) Vertreter: Schmid, Nils T.F.
(86) Internationale Anmeldenummer: PCT/EP2017/072374
(87) Internationale Veröffentlichungsnummer: WO 2018/054686

(56) Entgegenhaltungen:
- EP-A1- 3 012 696
- DE-A1-102014 103 422
- US-A- 5 650 943

## Beschreibung

Die Erfindung betrifft ein System zum Diagnostizieren eines prozessfluidführenden Stellgeräts, wie ein Stellventil. Stellgeräte werden eingesetzt in prozesstechnischen Anlagen, wie Kraftwerken, lebensmittelverarbeitenden Anlagen, chemischen Anlagen, beispielsweise petrochemischen Anlagen, oder dergleichen. Stellgeräte, wie Stellventile, beispielsweise Notschließventile, dienen in prozesstechnischen Anlagen dazu, eine Strömung eines Prozessfluids beispielsweise hinsichtlich eines Massestroms oder eines Fluiddrucks einzustellen oder zu unterbrechen. Die Erfindung betrifft auch ein Verfahren zur Diagnose des Zustands eines Schallemissionen abgebenden, prozessfluidführenden Stellgeräts, wie ein Stellventil, einer prozesstechnischen Anlage.

In der Prozesstechnik sind Vorrichtungen und Verfahren zum Analysieren von Schallemissionen an einem Stellgerät bekannt. Beispielsweise beschreibt DE 10 2008 010 853 A1 eine prozesstechnische Anlage, deren Anlagenkomponenten, beispielsweise Stellventile, mit Hilfe der Erfassung von Schallemissionen überwacht werden. Wenn bei einer bestimmten Anlage Schallemissionen detektiert werden, die einen Schwellwert überschreiten, wird ein Warnsignal ausgelöst und einem Überwachungstechniker in einer Anlagenleiteinheit mit Bildschirmüberwachung ein Überwachungsbild der möglicherweise defekten Anlagenkomponente angezeigt. Das von DE 10 2008 010 853 A1 bekannte System erlaubt es in großen prozesstechnische Anlagen noch in der Anlagenleiteinheit auf Gefahrensituation, wie Explosionen oder den Austritt von Prozessfluid, schnell reagieren zu können. Allerdings hat sich als nachteilig erwiesen, dass das System gemäß DE 10 2008 010 853 A1 nur die Reaktionsmöglichkeiten auf Gefahrensituationen verbessert, ohne deren Auftreten vorzubeugen.

DE 10 2012 016 295 A1 beschreibt eine Vorrichtung und ein Verfahren zum Quantifizieren eines Leckagedurchflusses an einem Stellgerät, dass sich zur fehlervorbeugenden Wartung eignet. Bei der bekannten Vorrichtung ist der Stellungsregler des Stellgeräts mit einem Sensor zum Erfassen von Körperschall des Stellgeräts und mit einem Drucksensor zum Erfassen des pneumatischen Stelldrucks ausgestattet. Auf Basis einer vorbestimmten Ventilstellung sowie Stelldruck- und Körperschall-Messwerten kann die bekannte Vorrichtung mit Hilfe von Referenzwerten bestimmen, ob eine innere Leckage an dem Stellventil vorliegt, wie auch die Leckagedurchflussmenge. Diese bekannte Vorrichtung erfreut sich großer Beliebtheit, weil sie mit verhältnismäßig geringem sensortechnischen Aufwand eine sehr verlässliche Informationsgewinnung über das Vorhandensein einer Leckage an einem Stellventil und sogar deren Größe zulässt. Dies erlaubt es dem Betreiber einer prozesstechnischen Anlage unter Gewährleistung einer größtmöglichen Anlagensicherheit Wartungsarbeiten an verschleißbedingt leckenden Stellventilen erst dann vorzunehmen, wenn sie tatsächlich notwendig sind. Infolge der positiven Erfahrung mit den von DE 10 2012 016 295 A1 beschriebenen Stellungsregler ist der Wunsch aufgekommen, auch bei anderen Stellgeräten auf Basis einfacher akustischer Sensoren Leckagen zu entdecken und deren Schweregrad ermitteln zu können, auch wenn diese Stellgeräte nicht bereits mit Körperschallsensoren und entsprechender Signalverarbeitungselektronik ausgestattet sind.

Eine Diagnosevorrichtung zum akustischen Testen von Ventilsystemen, insbesondere hinsichtlich Ventilleckage, ist bekannt aus US 5,650,943 A. Die Diagnosevorrichtung umfasst einen Computer mit Körperschallsensoren, die an ein Stellventil einer prozesstechnischen Anlage angeschlossen werden können, um deren Körperschallemissionen zu erfassen. Auf dem Computer können Referenz-Körperschallmesswerte für unterschiedliche Betriebssituationen von Stellventilen hinterlegt sein, mit denen ein Wartungstechniker gemessene Ist-Schallemissionswerte vergleichen kann, um einen Rückschluss auf den Zustand und insbesondere eine eventuelle Leckage an dem Ventil zu treffen. Die in US 5,650,943 A beschriebene Diagnosevorrichtung gestattet es zwar grundsätzlich, dass Wartungstechniken anhand von Körperschallmesswerten Aussagen über einen Leckagezustand von Stellventilen treffen können, ohne dass die Stellventile selbst akustische Sensoren haben. Allerdings hat sich gezeigt, dass die Handhabung der in US 5,650,943 A beschriebenen Diagnosevorrichtung sehr kompliziert und daher bedienfehleranfällig ist. Außerdem hat sich die bekannte Diagnosevorrichtung als ungeeignet zur Wartung von Stellventilen herausgestellt, die nicht sehr einfach zugänglich sind, etwa aufgrund ihrer Anordnung in einer prozesstechnischen Anlage.

DE 10 2014103 422 A1 offenbart ein Verfahren und eine Vorrichtung zur nahtlosen Zustandsübertragung zwischen UI-Geräten in einer mobilen Schaltzentrale. EP 3 012 696 A1 offenbart ein Verfahren zum Verbinden eines Feldgeräts mit einer Bedieneinheit sowie ein Feldgerät.

Es ist eine Aufgabe der Erfindung, die Probleme des Stands der Technik zu überwinden und insbesondere eine Diagnosevorrichtung bereitzustellen, mit der anhand von Schallmessungen Aussagen bezüglich des Zustands eines Stellgeräts, insbesondere des Leckagezustands eines Stellventils, getroffen werden können, wobei insbesondere eine einfache Handhabung der Diagnosevorrichtung gewährleistet sein soll.

Diese Aufgabe wird gelöst durch den Gegenstand der unabhängigen Ansprüche.

Die Erfindung betrifft ein System für eine prozesstechnische Anlage, wie eine chemische Anlage, eine Lebensmittel verarbeitende Anlage, ein Kraftwerk oder dergleichen, das ein eine Prozessfluidströmung führendes Stellgerät umfasst, wie ein Stellventil, wobei das Stellgerät einen Identifikator, wie ein RFID Tag, ein Barcode, eine Plakette, ein Netzwerkadresscode oder dergleichen, aufweist, der eine stellgeräteindividuelle Kennung repräsentiert. Das erfindungsgemäße System umfasst ferner eine tragbare Diagnosevorrichtung. Das Erfassen einer stellgeräteindividuellen Kennung mittels der tragbaren Diagnosevorrichtung kann beispielsweise erfolgen, indem das Stellgerät seine Kennung optisch oder per Funk der Diagnosevorrichtung bereitstellt, oder indem Wartungspersonal eine stellgeräteindividuelle Kennung durch eine Benutzerschnittstelle in die tragbare Diagnosevorrichtung eingibt.

Die tragbare Vorrichtung zum Diagnostizieren eines prozessfluidführenden Stellgeräts, wie ein Stellventil, einer prozesstechnischen Anlage, wie eine chemische Anlage, eine Lebensmittel verarbeitende Anlage, ein Kraftwerk oder dergleichen umfasst erfindungsgemäß eine Identifizierungseinrichtung zum Erfassen der stellgeräteindividuellen Kennung, sowie eine Schallsensoreinrichtung zum kontaktfreien Erfassen von Schallemissionen des Stellgeräts. Vorzugsweise hat die tragbare Vorrichtung ein geringes Gewicht von unter 5 kg, insbesondere von unter 1 kg, vorzugsweise weniger als 500 g, und ist somit in einer Hand tragbar. Weniger bevorzugt kann die Vorrichtung auch in dem Sinne tragbar sein, dass sie durch lediglich manuell aufgebrachte Kraft ortsbeweglich ist, beispielsweise mit Hilfe von Rollen. Der Begriff "tragbar" ist insbesondere so zu verstehen, dass eine einzelne Person ohne besondere Kraftanstrengung dazu in der Lage sein soll, die Diagnosevorrichtung zu transportieren, insbesondere innerhalb einer prozesstechnischen Anlage, um die tragbare Diagnosevorrichtung von einem prozessfluidführenden Stellgerät zu weiteren prozessfluidführenden Stellgeräten gleicher oder unterschiedlicher Art zu transportieren. Das Diagnostizieren mittels der tragbaren Diagnosevorrichtung kann sich insbesondere auf eine Wartungssituation oder eine Sicherheitsüberprüfungssituation im Hinblick auf mögliche verschleißbedingte Leckagedurchflüsse an einem prozessfluidführenden Stellgerät, insbesondere an einem die Prozessfluidströmung drosselnden Prozessstellgerät, beziehen. Mit der tragbaren Diagnosevorrichtung sollen insbesondere Stellventile, wie Regel- und/oder Steuerventile oder Notschließventile begutachtet werden können.

Als Schallsensoreinrichtung zum kontaktfreien Erfassen von Schallemissionen des Stellgeräts kann beispielsweise ein optischer Sensor, wie ein Vibrometer, beispielsweise ein Laser-Doppler-Vibrometer, vorgesehen sein, oder eine Kamera mit ausreichend hochauflösender und hochfrequenter Bilderfassung insbesondere zur optischen Schallerfassung im hörbaren Frequenzspektrum und/oder im Ultraschallspektrum. Eine Schallsensoreinrichtung zum kontaktfreien Erfassen von Schallemissionen des Stellgeräts kann alternativ oder zusätzlich auch akustisch ausgestattet sein, beispielsweise mit einem Richtmikrofon oder dergleichen, zur Aufnahme von Luft-Schall insbesondere im hörbaren und/oder Ultraschall-Frequenzspektrum. Wenn die Schallsensoreinrichtung sowohl einen akustischen Sensor und zum Erfassen von Luftschall als auch einen optischen Sensor zum Erfassen von Körperschall des Stellgeräts aufweist, kann eine besonders präzise Erfassung der Schallemissionen des Stellgeräts gewährleistet sein.

Die Identifizierungseinrichtung erlaubt es der erfindungsgemäßen tragbaren Diagnosevorrichtung festzustellen, bezogen auf welches individuelle Stellgerät einer Vielzahl möglicher Stellgeräte eine Diagnose durchzuführen ist. Dadurch ist es der erfindungsgemäßen Vorrichtung möglich, die von der Schallsensoreinrichtung der Diagnosevorrichtung erfassten Schallemissionen des identifizierten Stellgeräts direkt oder indirekt Schallemissions-Referenzwerten dem identifizierten Stellgeräts zuzuordnen. Die Schallemissions-Referenzwerte können beispielsweise vorab gemessene Schallemissionswerte des konkreten identifizierten Stellgeräts sein, oder Normwerte bezüglich Stellgeräten, die baugleich zu dem konkreten identifizierten Stellgerät sind. Es sei klar, dass auch andere Referenzwerte als Schallemissions-Referenzwerte für eine Diagnose herbeigezogen werden können.

Die bei der erfindungsgemäßen tragbaren Vorrichtung vorgesehene Identifizierungseinrichtung zum Erfassen einer stellgeräteindividuellen Kennung kann anhand eines stellgeräteindividuellen Identifikators jedem Stellgerät eine Kennung zugeordnet sein, anhand derer das individuelle Stellgerät unterscheidbar ist. Beispielweise kann jedem individuellen Stellgerät eines Herstellers, jedem individuellen Stellgerät eines Stellgerät-Benutzers oder jedem individuellen Stellgerät innerhalb einer prozesstechnischen Anlage, wie einem einzelnen Kraftwerk, eines Stellgerät-Benutzers eine Kennung zugeordnet sein, anhand derer das individuelle Stellgerät von sämtlichen anderen Stellgeräten des Herstellers, des Benutzers oder der Anlage unterscheidbar ist.

Das Diagnostizieren des prozessfluidführenden Stellgeräts betrifft erfindungsgemäß das Feststellen möglicher fehlerhafter Zustände oder Defekte des Stellgeräts. Es soll festgestellt werden, ob an dem zu diagnostizierenden Stellgerät eine Leckage oder Kavitation stattfindet, oder ob das Stellgerät Verschleißerscheinungen erkennen lässt, die auf ein möglicherweise baldiges Versagen des Stellgeräts hindeuten.

Die Kennung des zu identifizierenden Stellgeräts kann beispielsweise eine Identifikationsnummer des Stellgeräts sein, die dem Stellgerät zugeordnet worden ist beispielsweise von dessen Hersteller, etwa während der Produktion, oder von dem Benutzer des Stellgeräts, zum Beispiel bei dessen Kauf oder Einbau in eine Anlage. Die Kennung eines Stellgeräts kann beispielsweise in arabischen Ziffern oder als 2D-Barcode oder 3D-Barcode physikalisch auf einer Außenseite, beispielsweise einer Plakette, des Stellgeräts sichtbar angeordnet sein, um von einem optischen Sensor, wie einer Kamera, erfasst zu werden. Vorzugsweise kann die Seriennummer eines individuellen Stellgeräts als dessen Kennung dienen. Es ist auch denkbar, dass Wartungspersonal, welches die tragbare Diagnostiziereinrichtung verwendet, die Kennung des zu identifizierenden Stellgeräts an dem Stellgerät abliest und über eine Benutzerschnittstelle, wie einer Tastatur der Diagnosevorrichtung, welche als Identifizierungseinrichtung wirkt, der tragbaren Vorrichtung manuell einzugeben.

Erfindungsgemäß weist die Schallsensoreinrichtung einen akustischen Sensor, wie ein Mikrofon, zum Erfassen von Luftschall des Stellgeräts auf, und einen optischen Sensor, wie eine Videokamera, zum Erfassen von Körperschall des Stellgeräts. Der optische Sensor kann ein Laserinterferometer, insbesondere ein Laser-Doppler-Vibrometer, umfassen, das eine Lasersendeeinheit, vorzugsweise einen roten Helium-Neon-Laser, und eine Laserempfangseinheit, wie eine Photozelle, umfasst. Zum vibrationsgeschützten Ausrichten (passiv oder aktiv gedämpft) der Schallsensoraufrichtung auf das Stellgerät kann die Diagnosevorrichtung mit einem Stativ ausgestattet sein oder an einer Halterung anbringbar sein. Auf diese Weise können Messfehler beispielsweise infolge von Zittern der Hand des Benutzers vermieden werden.

Erfindungsgemäß umfasst die tragbare Diagnosevorrichtung eine Kommunikationseinrichtung, wie eine Funkkommunikationseinrichtung oder eine optische Kommunikationseinrichtung, zum Bereitstellen einer Kommunikationsverbindung mit dem Schallemissionen abgebenden Stellgerät und/oder einem entfernten Rechnersystem, wie einem Server, einer Datenbank oder einer Leitwarte. Indem die Diagnosevorrichtung mit einer Kommunikationseinrichtung ausgestattet ist, kann die Diagnosevorrichtung stellgerätespezifische Informationen, wie Messinformationen, Referenzinformationen oder dergleichen, empfangen und/oder versenden. Beispielsweise kann eine solche tragbare Diagnosevorrichtung erfasste Schallemissionen des Stellgeräts, die Kennung des Stellgeräts und gegebenenfalls weitere stellgerätespezifische Messwerte mit einer Funkkommunikationsrichtung an einen Server senden, damit dieser anhand der von der tragbaren Vorrichtung übermittelten Informationen und auf dem Server vorliegender Referenzwerte eine Diagnose bezogen auf das identifizierte
Stellgerät durchführen kann. Der Server kann anschließend über die Kommunikationseinrichtung der Diagnosevorrichtung das Diagnoseergebnis mitteilen.

Erfindungsgemäß weist die Kommunikationseinrichtung eine Nahbereichskommunikationseinrichtung zum Bereitstellen einer Kommunikationsverbindung mit einer Stellgerätelektronik, wie einen Stellungsregler, des Schallemissionen abgebenden Stellgeräts auf. Die Nahbereichskommunikationseinrichtung kann beispielsweise eine Funkkommunikationseinrichtung zur Nahfeldkommunikation mittels Bluetooth, NFC, wireless HART, WLAN oder dergleichen sein. Alternativ oder zusätzlich kann die Nahbereichskommunikationseinrichtung eine optische Kommunikationseinrichtung zur Nahfeldkommunikation mittels Infrarot, sichtbarem Licht, Ultraviolett oder dergleichen sein.

Die Nahbereichskommunikationseinrichtung kann beispielsweise dazu ausgestaltet sein, Messwerte von einer Stellgeräteelektronik des Stellungsreglers zu empfangen. Hierzu kann beispielsweise die tragbare Diagnosevorrichtung eine optische Kamera als Nahbereichskommunikationseinrichtung umfassen, wobei stellgerätespezifische Messwerte auf einer optischen Anzeige (beispielsweise einem LCD-Display) des Stellgeräts dargestellt werden, beispielsweise in arabischen Buchstaben und Ziffern zum Ablesen durch Wartungspersonal und/oder als dynamischer QR-Code (2D-Barcode), also in maschinenlesbarer Form. Solche Informationen in einem QR-Code, der auf einer Anzeige des Stellgeräts dargestellt wird, können wenigstens einen aktuellen und/oder vergangenen Betriebszustand des Stellgeräts (beispielsweise eines Ventils) und/oder Umgebungs-Messwerte sein. Ein Umgebungs-Messwert kann beispielsweise eine Anlagen-Temperatur nahe dem Stellgerät sein. Betriebszustände des Stellgeräts können beispielsweise Druck- und/oder Temperatur-Messwerte bezogen auf das von dem Stellgerät geführte Prozessfluid sein. Die Nahbereichskommunikationseinrichtung ist vorzugsweise kabellos. Falls das Stellgerät ein Stellventil ist, kann ein stellgerätespezifischer Betriebszustand beispielsweise dessen Ventilstellung, wie eine Auf-Stellung, eine Zu-Stellung oder eine teilweise geöffnete Stellung sein.

Bei einer bevorzugten Weiterbildung der Erfindung ist die Identifizierungseinrichtung dazu eingerichtet, die Kennung des Stellgeräts mittels der Nahbereichskommunikationseinrichtung von der Stellgerätelektronik zu empfangen. Beispielsweise kann die Nahbereichskommunikationseinrichtung zu diesem Zweck als NFC-Funkkommunikationseinrichtung zur Nahfeldkommunikation realisiert sein, die die Kennung durch Kommunikation mit einem Funk-Transponder des Stellgeräts erfährt. Bei einer besonders bevorzugten Ausführungsform kann eine dezidierte Nahbereichskommunikationseinrichtung ausschließlich dazu vorgesehen sein, die Kennung des Stellgeräts zu empfangen. Die Kennung des Stellgeräts kann alternativ auch mittels einer optischen Nahbereichskommunikationseinrichtung, beispielsweise einer Kamera oder einen Barcodescanner, durch Ablesen der Kennung von einer Anzeige, wie einem LCD-Display, des Stellgeräts zu empfangen.

Erfindungsgemäß umfasst die Diagnosevorrichtung eine mit der wenigstens einen Schallsensoreinrichtung signalübertragungsgemäß verbundene Datenverarbeitungselektronik zum Verarbeiten von Schallemissions-Messwerten und einen Datenspeicher zum Speichern zumindest der Kennung des Stellgeräts, wobei insbesondere die Datenverarbeitungselektronik dazu eingerichtet ist, eine Signalanalyse der Schallemissions-Messwerte durchzuführen, wie eine Frequenzanalyse, insbesondere eine Fast-Fourier-Transformation zur Bestimmung frequenzabhängiger Schallintensitäten. Durch den Vergleich von solchen ermittelten frequenzabhängigen Schallintensitäten mit vorbestimmten Referenzspektren können Schädigungen eines Ventilkegels und/oder Überschreiten von kritischer Kavitation zuverlässig erkannt werden.

Erfindungsgemäß ist die Datenverarbeitungselektronik dazu eingerichtet, mittels der Nahbereichskommunikationseinrichtung von einer Stellgeräteelektronik stellgerätespezifische Kennwerte zu empfangen, beispielsweise betreffend die Art des Stellgeräts (zum Beispiel: Not-Schließventil, Stellventil oder dergleichen), die Ausgestaltung des Stellgeräts (Bauform, Abmaße, Ausstattung, etc.) oder betreffend des von dem Stellgerät geführten Prozessfluids (zum Beispiel: Art des Mediums, Temperatur, Druck). Insbesondere ist die Datenverarbeitungselektronik dazu eingerichtet, dem Datenspeicher die empfangenen stellgerätespezifischen Kennwerte bereitzustellen. Die Datenverarbeitungselektronik kann beispielsweise ein Mikrocontroller, ein Mikroprozessor oder dergleichen sein, der in der tragbaren Diagnosevorrichtung untergebracht ist. Als Datenspeicher kann beispielsweise eine Festplatte, ein Flash-Speicher oder dergleichen dienen. Es sei klar, dass stellgerätespezifische Kennwerte unabhängig von dem Zustand des Stellgeräts während seiner Regelungsfunktion oder dergleichen sind. Kennwerte können insofern auch als statische Werte des Stellgeräts bezeichnet sein.

Bei einer anderen bevorzugten Weiterbildung der Erfindung, die mit der vorherigen kombinierbar ist, ist die Datenverarbeitungselektronik dazu eingerichtet, mittels der Nahbereichskommunikationseinrichtung von der Stellgerätelektronik stellgerätespezifische Messwerte zu empfangen, beispielsweise einen Ist-Eingangsdruck, einen Ist-Ausgangsdruck, eine Ist-Temperatur, eine Ist-Strömungsgeschwindigkeit, eine Ist-Druckdifferenz, oder dergleichen. Insbesondere kann die Datenverarbeitungselektronik dazu eingerichtet sein, dem Datenspeicher die empfangenen stellgerätespezifischen Messwerte bereitzustellen.

Wenn die Diagnosevorrichtung eine Datenverarbeitungselektronik hat, die dazu eingerichtet ist, mittels der Nahbereichskommunikationseinrichtung von der Stellgerätelektronik des zu diagnostizierenden Stellgeräts stellgerätespezifische Kennwerte und/oder Messwerte zu empfangen, können unter Ausnutzung des vorhandenen Speichers üblicher Stellgeräte die dort hinterlegten Kenn- und/oder Messwerte, die das Stellgerät und/oder dessen Zustand charakterisieren, auf einfache Weise von der tragbaren Diagnosevorrichtung erfasst werden, um sie diagnostisch zu berücksichtigen. Als stellgerätespezifische Kennwerte können beispielsweise Schallemissions-Referenzwerte in der Stellgerätelektronik des Stellgeräts hinterlegt sein, beispielsweise einem Speicher.

Bei einer bevorzugten Weiterbildung der Erfindung ist die Datenverarbeitungselektronik der Diagnosevorrichtung dazu ausgelegt, anhand von stellgerätespezifischen Messwerten und stellgerätespezifischen Kennwerten einen Ist-Durchflusswert des Prozessfluids durch das Stellgerät zu bestimmen. Beispielsweise kann auf Basis hinterlegter Kennwerte betreffend den Durchströmungsquerschnitt oder bezogen auf Ventilglied und Ventilsitz und/oder basierend auf einem Ist-Eingangsdruck und einem Ist-Ausgangsdruck und/oder auf Kennwerten betreffend der Materialeigenschaften des Prozessfluids von der Datenverarbeitungselektronik unter Berücksichtigung des Öffnungszustands des Stellventils ein Ist-Durchflusswert bestimmt werden. Eine solche Bestimmung eines Ist-Durchflusswerts durch die Diagnosevorrichtung kann insbesondere dann von Vorteil sein, wenn das zu diagnostizierende Stellgerät einen relativ simplen Aufbau aufweist und zwar über Sensoren verfügt, jedoch nicht über eine stellgeräteigene Datenverarbeitungs- bzw. Diagnoseelektronik.

Bei einer bevorzugten Ausführung der Erfindung weist die Kommunikationseinrichtung der Diagnosevorrichtung alternativ oder zusätzlich eine Fernkommunikationseinrichtung auf, insbesondere eine Funkkommunikationsvorrichtung, vorzugsweise zur Mobilfunkkommunikation, beispielsweise ausgelegt zur Funkkommunikation gemäß UMTS, GSM, LTE oder dergleichen, zum Bereitstellen einer Kommunikationsverbindung mit dem entfernten Rechnersystem, wie ein Server oder einer Leitwarte. Mittels einer solchen Fernkommunikationseinrichtung kann die Diagnosevorrichtung beispielsweise Diagnoseergebnisse einer Leitwarte mitteilen oder eine Diagnosefunktion von einem entfernten Rechnersystem durchführen lassen oder beispielsweise Referenzwerte betreffend die Schallemissionen des identifizierten Stellgeräts von einem entfernten Rechnersystem abrufen.

Bei einer bevorzugten Weiterbildung der Erfindung ist die Datenverarbeitungselektronik dazu eingerichtet, mittels der Fernkommunikationseinrichtung dem entfernten Rechnersystem die Kennung des Stellgeräts mitzuteilen und von dem entfernten Rechnersystem, insbesondere von einer Datenbank des Rechnersystems, stellgerätespezifische Kennwerte, stellgerätespezifische Umgebungsbedingungen, stellgerätespezifische Analyseroutinen, stellgerätespezifische Analyseergebnisse und/oder eine Stellgerätzustandsinformation zu empfangen. Das entfernte Rechnersystem kann beispielsweise durch ein sogenanntes Cloud-System realisiert sein. Ein als Cloud-System realisiertes entferntes Rechnersystem kann dazu ausgestaltet sein, auf Basis der Kennung des Stellgeräts und der durch die Diagnosevorrichtung erfassten Schallemission des Stellgeräts sowie gegebenenfalls weiteren stellgerätespezifischen Kennwerten und/oder Messwerten eine Diagnosefunktion betreffend das Stellgerät durchzuführen.

Bei einer weiteren bevorzugten Ausführungen der Erfindung, die mit der vorherigen kombinierbar ist, umfasst die tragbare Diagnosevorrichtung eine Anzeige, wie eine optische Anzeige oder eine akustische Anzeige, zum Darstellen einer Stellgerätezustandsinformation, wobei die Anzeige der Vorrichtung vorzugsweise dazu ausgelegt ist, ein optisches und/oder akustisches Warnsignal auszugeben. Eine Diagnosevorrichtung mit einer solchen optischen und/oder akustischen Anzeige ist insbesondere dann von Vorteil, wenn die prozesstechnische Anlage, deren Stellgeräte mit der Diagnosevorrichtung von Wartungspersonal getestet werden, keine oder zumindest zum Teil keine eigenen Anzeigen aufweisen. Vorzugsweise umfasst die tragbare Diagnoseeinrichtung ein Mobiltelefon, insbesondere ein Smartphone, oder besteht aus einem solchen und nutzt die vorhandene Sensor-, Anzeige-, Eingabe-, Datenverarbeitungs-, und/oder Datenspeicher-Hardware des Mobiltelefons, insbesondere des Smartphones.

Bei einer alternativen bevorzugten Ausführung kann die tragbare Diagnosevorrichtung zumindest teilweise durch die Hardware eines Mobiltelefons, insbesondere eines Smartphones, gebildet sein. So kann beispielsweise die Diagnosevorrichtung realisiert sein als ein Set umfassend ein Smartphone und ein Sensormodul sein, das signalübertragungsgemäß mit dem Smartphone verbunden ist, und das eine Schallsensoreinrichtung zum kontaktfreien Erfassen von Schallemissionen des Stellgeräts bildet.

Eine bevorzugte Ausführung eines erfindungsgemäßen Systems umfasst ferner ein entferntes Rechnersystem, wie ein Server oder eine Leitwarte, wobei das entfernte Rechnersystem eine Datenbank aufweist, die stellgerätespezifische Referenzwerte, stellgerätespezifische Kenngrößen und/oder stellgerätespezifische Analyseroutinen zur Diagnose enthält. Insbesondere kann das entfernte Rechnersystem dazu eingerichtet sein, eine Signalanalyse der Schallemissionswerte durchzuführen, die von der tragbaren Vorrichtung über ihre Schallsensoreinrichtung kontaktfrei erfasst wurden, wie eine Frequenzanalyse, insbesondere eine Fast-Fourier-Transformation zur Bestimmung frequenzabhängiger Schallintensität. Indem das entfernte Rechnersystem zur Signalanalyse der Schallemissionswerte eingerichtet ist, kann die Analyseberechnung oder -routine mit Hilfe besonders leistungsfähiger Datenverarbeitungselektronik durchgeführt werden, die sich nicht oder nur mit hohem Kostenaufwand in einer tragbaren Vorrichtung unterbringen lassen würde.

Bei einer bevorzugten Ausführung eines erfindungsgemäßen Systems umfasst das Stellgerät eine Nahbereichskommunikationseinrichtung zur Kommunikation mit einer tragbaren Vorrichtung, die insbesondere zum Bereitstellen des Identifikators des Stellgeräts an die tragbare Vorrichtung eingerichtet ist.

Bei einer anderen bevorzugten Ausführung eines erfindungsgemäßen Systems, die mit der vorherigen kombinierbar ist, weist das Stellgerät eine Stellgeräteelektronik mit einem Datenspeicher für stellgerätespezifische Kennwerte, stellgerätespezifische Messwerte und/oder stellgerätespezifische Referenzwerte auf. Dabei kann die Nahbereichskommunikationseinrichtung des Stellgeräts insbesondere dazu eingerichtet sein, der Diagnosevorrichtung die stellgerätespezifischen Kennwerte, die stellgerätespezifischen Messwerte und/oder die stellgerätespezifischen Referenzwerte mitzuteilen. Bei diesem bevorzugten System sind die stellgerätespezifischen Informationen auf einem oftmals ohnehin vorhandenen Datenspeicher eines Stellgeräts hinterlegt und brauchen nicht in einer Datenbank eines entfernten Rechnersystems hinterlegt werden.

Erfindungsgemäß weist die Diagnosevorrichtung einen optischen Sensor zum Erfassen von Körperschall auf und das Stellgerät eine Markierung, mittels welcher die tragbare Diagnosevorrichtung zum optischen Erfassen von Körperschall auf das Stellgerät ausrichtbar ist. Zusätzlich kann das System eine Halterung und/oder ein Stativ zum ortsfesten Positionieren der tragbaren Diagnosevorrichtung zum optischen Erfassen von Körperschall aufweisen. Auf diese Weise kann die Qualität der optischen Körperschall-Erfassung einfach verbessert werden.

Die Erfindung betrifft ferner ein Verfahren zur Diagnose des Zustands eines Schallemissionen abgebenden, prozessfluidführenden Stellgeräts, wie ein Stellventil, einer prozesstechnischen Anlage, wie eine chemische Anlage, eine Lebensmittel verarbeitende Anlage, ein Kraftwerk oder dergleichen. Bei dem erfindungsgemäßen Diagnoseverfahren wird eine tragbare Vorrichtung zum Diagnostizieren eines Prozessfluid führenden Stellgeräts verwendet, das insbesondere wie oben beschrieben ausgebildet sein kann. Bei dem erfindungsgemäßen Diagnoseverfahren wird mittels der tragbaren Diagnosevorrichtung eine stellgeräteindividuelle Kennung erfasst und durch wenigstens eine Schallsensoreinrichtung der tragbaren Diagnosevorrichtung werden optisch und/oder akustisch Ist-Schallemissionswerte des Stellgeräts kontaktfrei erfasst.

Bei einer bevorzugten Ausführung eines erfindungsgemäßen Diagnoseverfahrens werden ferner stellgerätespezifische Referenz-Schallemissionswerte bezüglich des Stellgeräts bereitgestellt und die Ist-Schallemissionswerte werden mit Referenz-Schallemissionswerten verglichen, um eine stellgerätespezifische Zustandsinformation, wie ein Diagnoseergebnis, zu ermitteln. Dabei kann insbesondere eine Signalanalyse der Ist-Schallemissionswerte durchgeführt werden, beispielsweise mittels einer Fast-Fourier-Transformation, vorzugsweise zur Ermittlung von charakteristischen frequenzabhängigen Schallintensitäten, wobei insbesondere ein Vergleich von ermittelten charakteristischen frequenzabhängigen Schallintensitäten mit wenigstens einem Referenz-Schallemissionsspektrum durchgeführt wird, um die stellgerätespezifische Zustandsinformation zu ermitteln, etwa eine Schädigung eines Ventilkegels und/oder ein Überschreiten einer kritischen Kavitation. Bei einem einfacheren erfindungsgemäßen Verfahren kann ein Ist-Schallemissionswert oder mehrere Ist-Schallemissionswerte mit Schallemissions-Grenzwerten verglichen werden, wobei bei Überschreiten eines Grenzwerts (oder Unterschreiten eines Grenzwerts) auf das Vorhandensein eines Fehlers, wie einer Verstopfung, einer Leckage oder einer zu hohen Kavitation an dem Stellgerät geschlossen wird.

Erfindungsgemäß wird eine Nahfeldkommunikationsverbindung zwischen der tragbaren Diagnosevorrichtung und einer Stellgeräteelektronik des Stellgeräts aufgebaut. Dabei kann insbesondere die Kennung des Stellgeräts der tragbaren Diagnosevorrichtung von der Stellgeräteelektronik über die Nahfeldkommunikationsverbindung der tragbaren Diagnosevorrichtung mitgeteilt werden. Als Nahfeldkommunikationsverbindung kann insbesondere eine Funkverbindung oder eine optische Kommunikationsverbindung zwischen der tragbaren Diagnosevorrichtung und der Stellgeräteelektronik des Stellgeräts aufgebaut werden. Die Nahfeldkommunikationsverbindung kann unidirektional (insbesondere von der Stellgeräteelektronik zu der tragbaren Diagnosevorrichtung) oder bidirektional sein.

Erfindungsgemäß werden der tragbaren Diagnosevorrichtung mittels der Nahfeldkommunikationsverbindung stellgerätespezifische Kennwerte, stellgerätespezifische Messwerte und/oder stellgerätespezifische Referenzwerte von der Stellgeräteelektronik mitgeteilt. Die stellgerätespezifischen Messwerte, die mit der tragbaren Diagnosevorrichtung mittels der Nahfeldkommunika
-tionsverbindung von der Stellgeräteelektronik mitgeteilt werden, können insbesondere in Echtzeit und/oder mit einem Zeitstempel versehene Ist-Messwerte sein, beispielsweise ein Ist-Eingangsdruck und/oder ein
Ist-Ausgangsdruck sein, wobei vorzugsweise die optisch und/oder akustisch erfassten Ist-Schallemissionswerte, die durch die Schallsensoreinrichtung der tragbaren Diagnosevorrichtung kontaktfrei erfasst werden, ein oder mehrere entsprechende stellgerätespezifische Messwerte vorzugsweise zeitlich zugeordnet werden. Bei der Verwendung von Zeitstempeln kann vor der Übermittlung der stellgerätespezifischen Messwerte ein Zeit-Abgleich oder eine Zeitstempel-Synchronisierung von der tragbaren Diagnosevorrichtung und der Stellgeräteelektronik durchgeführt werden.

Bei einer bevorzugten Ausführung eines erfindungsgemäßen Diagnoseverfahrens, die mit den vorherigen kombinierbar ist, wird eine Fern-Kommunikationsverbindung, insbesondere eine Funkverbindung, zwischen der tragbaren Diagnosevorrichtung und einem entfernten Rechnersystem aufgebaut. Das entfernte Rechnersystem kann beispielsweise ein Server oder eine Leitwarte sein. Dabei können insbesondere von der tragbaren Diagnosevorrichtung und dem entfernten Rechnersystem mittels der Fern-Kommunikationsverbindung die Kennung des Stellgeräts mitgeteilt werden. Ferner können gegebenenfalls von der tragbaren Diagnosevorrichtung mittels der Fern-Kommunikationsverbindung dem entfernten Rechnersystem stellgerätespezifische Kennwerte, stellgerätespezifische Messwerte und/oder stellgerätespezifische Ist-Schallemissionswerte mitgeteilt werden. Auf diese Weise kann das entfernte Rechnersystem dazu verwendet werden, verhältnismäßig aufwendige Berechnungen zur Diagnose des zu diagnostizierenden Stellgeräts durchzuführen, um eine stellgerätespezifische Zustandsinformation, wie ein Diagnoseergebnis, zu erzeugen und anzugeben.

Bei einer bevorzugten Weiterbildung werden mittels der Fern-Kommunikationsverbindung von dem entfernten Rechnersystem an die tragbare Diagnosevorrichtung stellgerätespezifische Kennwerte, stellgerätespezifische Referenzwerte und/oder eine stellgerätespezifische Zustandsinformation mitgeteilt, wie ein Diagnoseergebnis.

Bei einer ersten bevorzugten Ausführung kann die tragbare Diagnosevorrichtung mit einer relativ einfachen Datenverarbeitungselektronik ausgestattet sein, die Ist-Schallemissionswerte und die Kennung des Stellgeräts sowie gegebenenfalls weitere stellgerätespezifische Kennwerte und/oder stellgerätespezifische Messwerte dem entfernten Rechnersystem mitteilt, damit das entfernte Rechnersystem ein Diagnoseergebnis erstellen kann. Bei einer alternativen Ausführung kann die tragbare Diagnosevorrichtung anhand des stellgerätespezifischen Kennwerts von dem entfernten Rechnersystem eine stellgerätespezifische Diagnoseroutine, stellgerätespezifische Referenzwerte und/oder stellgerätespezifische Kennwerte erhalten, so dass mit der tragbaren Diagnosevorrichtung eine Diagnoseroutine durchführbar (vorzugsweise die übermittelte) ist. Die tragbare Diagnosevorrichtung kann anschließend dem entfernten Rechnersystem das Diagnoseergebnis mitteilen. Diese bevorzugte Ausführung eignet sich besonders dazu, dass das Wartungspersonal schnell ein Diagnoseergebnis mittels der tragbaren Diagnosevorrichtung erstellen kann, um dieses beispielsweise an eine Leitwarte zeitnah mitzuteilen.

Bei einer bevorzugten Ausführung des erfindungsgemäßen Verfahrens wird der Vergleich von Ist-Schallemissionswerten mit den Referenz-Schallemissionswerten mit der tragbaren Diagnosevorrichtung oder dem entfernten Rechnersystem durchgeführt. Insbesondere wird eine Signalanalyse der Ist-Schallemissionswerte durchgeführt, insbesondere eine Fast-Fourier-Transformation, vorzugsweise zur Ermittlung von charakteristischen frequenzabhängigen Schallintensitäten, wobei insbesondere ein Vergleich der ermittelten charakteristischen frequenzabhängigen Schallintensitäten mit wenigstens einem hinterlegten Referenzspektrum durchgeführt wird, um eine stellgerätespezifische Zustandsinformation zu ermitteln, wie Schädigungen des Ventilkegels und/oder ein Überschreiten kritischer Kavitation.

Bei einer weiteren bevorzugten Ausführung der Erfindung werden mit dem erfindungsgemäßen Diagnoseverfahren mittels einer vorzugsweise optischen Anzeige der tragbaren Diagnosevorrichtung stellgerätespezifische Zustandsdaten ausgegeben, insbesondere graphisch und/oder als Text, und/oder wobei mittels der Anzeige der tragbaren Diagnosevorrichtung ein optisches und/oder akustisches Warnsignal ausgegeben werden kann. Mit einem Warnsignal kann insbesondere ein vorherrschender oder drohender Fehler- oder Schadens-Zustand des identifizierten und zu diagnostizierenden Stellgeräts dem Wartungspersonal schnell deutlich gemacht werden, so dass eine unmittelbare Reaktion erfolgen kann.

Es sei klar, dass die erfindungsgemäße tragbare Vorrichtung und/oder das erfindungsgemäße System dazu eingerichtet sein können, Funktionen gemäß dem erfindungsgemäßen Diagnoseverfahren durchzuführen. Ferner sei klar, dass das erfindungsgemäße Diagnoseverfahren dazu ausgebildet sein kann, gemäß der Funktionen der erfindungsgemäßen tragbaren Diagnosevorrichtung oder des erfindungsgemäßen Systems zu arbeiten.

Die Methode der Frequenzanalyse kann dem Standardlehrbuch "Signalübertragung - Grundlagen der digitalen und analogen Nachrichtenübertragungssysteme" (Lück, Kap. 2-4) entnommen werden.

Als akustische bzw. optische Warnanzeige können beispielsweise ein Lautsprecher und/oder Signal-LED dienen, falls von der tragbaren Diagnosevorrichtung oder durch das Diagnoseverfahren das Über- oder Unterschreiten eines Grenzwerts festgestellt wird. Im Falle eines Über- oder Unterschreitens eines Grenzwerts oder mehrerer Grenzwerte kann eine spezifische Diagnoseinformation betreffend den Ist-Messwert, der einen Grenzwert überschritten hat, ausgegeben werden.

Weitere Eigenschaften, Vorteile und Merkmale der Erfindung werden durch die folgende Beschreibung bevorzugter Ausführungen anhand der beiliegenden Zeichnung erläutert, in denen zeigt:

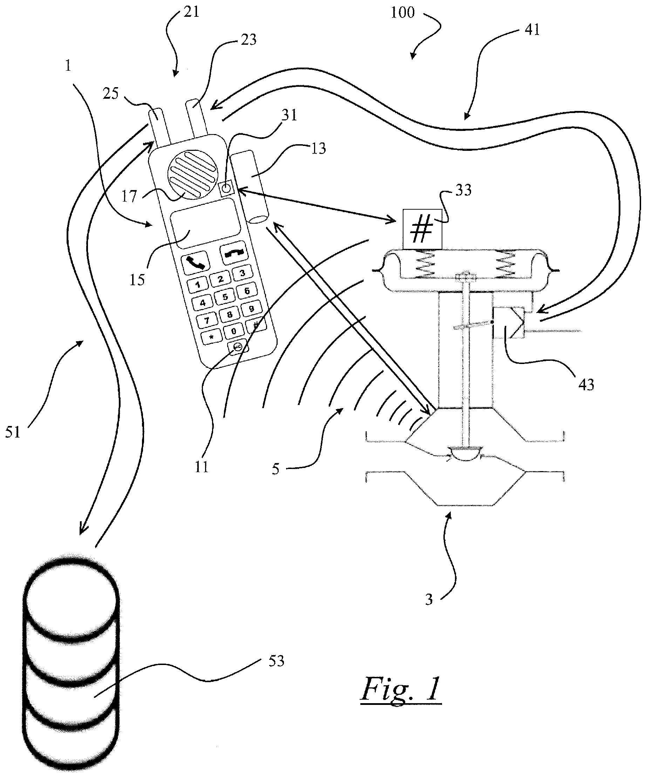

- Fig. 1: eine schematische Darstellung eines erfindungsgemäßen Diagnosesystems mit einer erfindungsgemäßen tragbaren Diagnosevorrichtung.

Fig. 1 zeigt eine erfindungsgemäße tragbare Vorrichtung 1 zum Diagnostizieren eines prozessfluidführenden Stellventils 3 einer prozesstechnischen Anlage. Die tragbare Diagnosevorrichtung 1 umfasst als Hauptbestandteile eine Identifizierungseinrichtung 31 und zwei Schallsensoreinrichtungen 11, 13. Die tragbare Vorrichtung 1 umfasst eine Schallsensoreinrichtung mit einem akustischen Sensor 11, der beispielsweise als Mikrofon zum Erfassen von Luftschall 5 realisiert sein kann. Die tragbare Vorrichtung 1 umfasst eine Schallsensoreinrichtung, die als optischer Sensor 13, beispielsweise als Laserinterferometer, zum Erfassen von Körperschall des Stellventils 3 ausgestaltet ist.

Der optische Sensor 13 umfasst bei der vorgeschlagenen bevorzugten Ausführungsform gemäß Fig. 1 ein Laser-Doppler-Vibrometer, das einen roten Helium-Neon-Laser als Lasersensoreinheit umfasst und eine Laserempfangseinheit in Form einer Photozelle. Die Lasersendeeinheit sendet einen roten Laserstrahl gerichtet auf das Gehäuse des Stellventils 3 und die Laserempfangseinheit empfängt das von dem Gehäuse des Stellventils 3 reflektierten Licht des roten Laserstrahls. Das Laser-Doppler-Vibrometer erfasst die Laufzeitänderungen des von dem vibrierenden Gehäuse des Stellventils 3 reflektierten Laserlichts. Anhand der Laufzeitänderung können Amplitude und Frequenz der Vibration des Stellventilgehäuses durch die Diagnosevorrichtung ermittelt werden. Um eine möglichst fehlerfreie optische Körperschallmessung zu gewährleisten, kann die tragbare Diagnosevorrichtung 1 und/oder deren optischer Sensor beispielsweise mittels einem aktiv oder passiv gedämpften Stativ ortsfest positioniert sein. Alternativ oder zusätzlich kann der optische Sensor auf eine bestimmte Referenzstelle des Stellventils 3 ausgerichtet sein. Die Verwendung einer vorbestimmten Referenzstelle vereinfacht das Vergleichen von Ist-Vibrations-Messwerten mit Referenz-Vibrations-Messwerten.

Die tragbare Diagnosevorrichtung 1 umfasst eine Kommunikationseinrichtung 21 mit einer Nahbereichskommunikationseinrichtung 23 zum Bereitstellen einer Nahfeld-Kommunikationsverbindung 41 mit der Stellgeräteelektronik 43 des Stellventils 3. Die Nahfeld-Kommunikationseinrichtung 23 kann beispielsweise dazu ausgestaltet sein, mittels Bluetooth oder WLAN Daten zu übertragen. Auch optische Nahbereichskommunikation mittels Infrarot kann durch eine alternative Nahbereichskommunikationseinrichtung 23 verwendet werden. Ferner umfasst die tragbare Diagnosevorrichtung 1 eine Kommunikationsvorrichtung 21 mit einer Fernkommunikationseinrichtung 25 zur Mobilfunkkommunikation mit einem entfernten Rechnersystem 53, das beispielsweise einen Server und eine Datenbank umfasst.

Das Stellventil 3 hat eine Kennung, um es zu identifizieren. Mit Hilfe der Kennung des Stellventils 3 kann es zumindest von sämtlichen anderen Stellventilen oder Stellgeräten einer prozesstechnischen Anlage unterschieden werden. Es ist auch denkbar, dass ein Stellventil 3 eine Kennung aufweist, mit deren Hilfe es von sämtlichen baugleichen Ventilen unterscheidbar ist. Wenn eine prozesstechnische Anlage unterschiedliche Stellgeräte oder ein Stellgerätehersteller unterschiedliche Stellgeräte herstellt, kann die Kennung eines spezifischen Stellgeräts auch derart sein, dass das individuelle Stellgerät eine Kennung aufweist, um es von jeglichen anderen Stellgeräten zu unterscheiden. Die Kennung des Stellventils kann beispielsweise hinterlegt sein in der Stellgeräteelektronik 34 des Stellventils 3. Alternativ oder zusätzlich kann eine Kennung des Stellventils 3 auf einen Identifikator 33, beispielsweise einem RFID Tag oder einer Plakette, des Stellventils hinterlegt sein. Die tragbare Diagnosevorrichtung 1 verfügt über eine Identifizierungseinrichtung zum Erfassen der stellgeräteindividuellen Kennung beispielsweise von dem Identifikator 33.

Das entfernte Rechnersystem 53 und/oder die Diagnosevorrichtung 1 kann eine Datenverarbeitungselektronik zum Verarbeiten von Schallemissions-Messwerten und/oder einen Datenspeicher zum Speichern zumindest der Kennung des Stellgeräts aufweisen. Die Datenverarbeitungselektronik ist dazu eingerichtet, eine Signalanalyse der Schallemissions-Messwerte durchzuführen. Die Signalanalyse kann beispielsweise als Fast-Fourier-Transformation zur Bestimmung frequenzabhängiger Schallintensitäten ausgestaltet sein.

Die Datenverarbeitungselektronik der tragbaren Diagnosevorrichtung 1 gemäß Fig. 1 ist dazu eingerichtet, mittels der Nahbereichskommunikationseinrichtung 23 stellgerätespezifische Messwerte betreffend den Ist-Eingangsdruck, den Ist-Ausgangsdruck, die Ist-Temperatur, etc. von der Stellgeräteelektronik 43 zu empfangen. Die Datenverarbeitungselektronik kann zugreifen auf stellgerätespezifische Kennwerte, beispielsweise betreffend die Art des Stellgeräts, die Ausgestaltung des Stellgeräts oder des von dem Stellgerät geführten Prozessfluids. Die Datenverarbeitungselektronik kann beispielsweise dazu eingerichtet sein, dem Datenspeicher der tragbaren Diagnosevorrichtung 1 von der Stellgeräteelektronik 43 empfangene stellgerätespezifische Kennwerte bereitzustellen. Basierend auf den stellgerätespezifischen Messwert und stellgerätespezifischen Kennwert, beispielsweise der Prozessfluiddichte, der Prozessfluidtemperatur, der Stellventil-Durchgangs-Geometrie, kann die Datenverarbeitungselektronik der Diagnosevorrichtung 1 an einen Ist-Durchflusswert durch das Stellgerät bestimmen. Diesen Ist-Durchflusswert kann die tragbare Diagnosevorrichtung 1 mit der gemessenen optischen und/oder akustischen Schallemission des Stellventils 3 vergleichen.

Das entfernte Rechnersystem kann beispielsweise ein Server oder eine Prozessanlage-Leitwarte sein. Die tragbare Diagnosevorrichtung kann insbesondere dazu ausgestaltet sein, mittels der Fernkommunikationseinrichtung, beispielsweise einer Funk-Kommunikationseinrichtung, dem entfernen Rechnersystem 53 die Kennung des individuellen Stellventils 3 mitzuteilen, das von der tragbaren Diagnosevorrichtung 1 analysiert wird, und in Reaktion auf die Mitteilung der Stellventil-Kennung an das entfernte Rechnersystem von diesem, insbesondere einer Datenbank des Rechnersystems 53, auf das spezifische Stellventil bezogene Kennwerte, Umgebungsbedingungen, Analyseroutinen, Analyseergebnisse und/oder eine Stellgerätezustandsinformation zu empfangen.

Je nach Ausführung des Systems kann das entfernte Rechnersystem 53 dazu ausgestaltet sein, auf eine Gruppe gleichartiger Stellgeräte bezogener Kennwerte hinterlegt zu haben, die von der tragbaren Diagnosevorrichtung 1 zur Verwendung in einer Diagnoseroutine abgerufen werden können. Auch eine Analyse- oder Diagnoseroutine bezogen auf eine Gruppe gleichartiger Stellgeräte kann in dem entfernten Rechnersystem 53 vorliegen, um bei Bedarf von der tragbaren Diagnosevorrichtung 1 angefragt zu werden. Wenn das entfernte Rechnersystem 53 als Server für die Diagnosevorrichtung 1 für die Durchführung der Diagnose bzw. Analyse eingerichtet ist, kann die tragbare Diagnosevorrichtung 1 Ist-Messwerte selbst erfassen oder von dem spezifischen Stellgerät (insbesondere einem Stellventil) erhalten und diese zusammen mit der Kennung des individuellen Stellgeräts (auf das die Messwerte bezogen sind) dem entfernten Rechnersystem 53 mitteilen. Das entfernte Rechnersystem 53 kann dann diese Daten bei einer Diagnoseroutine berücksichtigen und nur die Ergebnisse dieser Diagnose zurück an die Diagnosevorrichtung 1 übermitteln. Die Analyseergebnisse können von der Diagnosevorrichtung angezeigt werden und/oder der Elektronik 43 des Stellventils 3 weiter übertragen werden, um die Ergebnisse dort zu archivieren. Je nach Art der Analyse, die von Seiten des entfernten Rechnersystems 53 durchgeführt wird, kann der Diagnosevorrichtung 1 von dem Server eine spezifische Stellgerätezustandsinformation, beispielsweise einen Hinweis auf einen drohenden Defekt, mitgeteilt werden.

Zur Anzeige von Soll-Werten, Ist-Messwerten, Zustandsinformationen, etc. verfügt die Diagnosevorrichtung 1 über eine optische Anzeige 15 sowie gegebenenfalls eine akustische Anzeige 17. Die akustische Anzeige 17 kann beispielsweise dazu eingerichtet sein, dem Benutzer der tragbaren Diagnosevorrichtung 1 durch Anzeigen eines akustischen Signals mitzuteilen, dass eine Kommunikation der Diagnosevorrichtung 1 mit einem Stellgerät initiiert wird, durchgeführt wird, erfolgt ist, oder aufgrund eines Fehlers nicht durchgeführt werden kann. Die akustische Anzeige 17 eignet sich auch sehr gut dazu, Stellgerätezustandsinformationen wiederzugeben, beispielsweise indem spezifische akustische Signale ausgegeben werden, wenn das Stellgerät bzw. Stellventil 3 voll funktionstüchtig ist, ein Defekt droht oder gar ein Defekt vorliegt. Die optische Anzeige 15 kann dieselben Informationen ausgeben, wie auf die akustische Anzeige 17 oben dargelegt. Darüber hinaus können mit Hilfe einer optischen Anzeige 15 dem Benutzer numerische Messwerte oder Sollwerte dargestellt werden und konkrete Betriebszustandsinformationen des Stellgeräts angezeigt werden.

Die Kommunikation der tragbaren Kommunikationsvorrichtung ist mit dem entfernten Rechnersystem 53 kann beispielsweise genutzt werden, um die Kennung des individuellen Stellgeräts, das in Fig. 1 als Stellventil dargestellt ist, aber durchaus auch ein andersartiges Stellgerät sein kann, von dem entfernten Rechnersystem 53 spezifische Referenzwerte bezüglich des erkannten Stellgeräts mitzuteilen. Beispielsweise können Grenzwerte betreffend Schallemissionen des Stellgeräts, beispielsweise für eine Gruppe gleichartiger Stellgeräte, auf einem Datenspeicher des entfernten Rechnersystems 53, das beispielsweise als sogenannter Cloud-Speicher ausgestaltet sein kann, hinterlegt sein. Die Grenzwerte können von der tragbaren Diagnosevorrichtung 1 einzeln, abhängig von dem erkannten, individuellen, zu diagnostizierenden Stellgerät abgerufen werden.

Die tragbare Diagnosevorrichtung 1 kann von einem Monteur zu einem Stellgerät einer prozesstechnischen Anlage gebracht werden, wo mit dem akustischen Sensor bzw. den akustischen Sensoren 11, 13 der tragbaren Diagnosevorrichtung die Schallemissionen des Stellgeräts gemessen werden. Im Rahmen der Diagnose vor Ort des Stellgeräts erfasst die tragbare Diagnosevorrichtung 1 auch die Kennung des Stellgeräts, dessen Schallemissionen es erfasst. Basierend auf der Kennung des Stellgeräts erfragt die tragbare Diagnosevorrichtung bei dem entfernten Rechnersystem 53 dann stellgerätespezifische Kennwerte in Form von beispielsweise Schallpegel-Grenzwerten, mit denen die gemessenen Schallwerte verglichen werden, um anhand des Vergleichs durch die tragbare Diagnosevorrichtung festzustellen, ob das Stellgerät einwandfrei funktioniert, ein Fehler zu erwarten ist oder bereits vorliegt. Wie oben beschrieben kann die Diagnoseroutine, die für den Vergleich von Ist-Messwerten und Referenz-Schallwerten verwendet wird, in einem Datenspeicher der tragbaren Diagnosevorrichtung 1 hinterlegt sein. Die Diagnoseroutine, wie die Referenzwerte, kann alternativ als Reaktion auf die Mitteilung der Kennung erst zur Durchführung an die tragbare Diagnosevorrichtung 1 von dem entfernten Rechnersystem 53 übertragen werden.

Die Messung und Beurteilung von Schallemissionswerten eines Stellgeräts, wie zum Beispiel das Stellventil 3, mit Hilfe einer tragbaren Diagnosevorrichtung 1 kann insbesondere dafür genutzt werden, als stellgerätespezifische Zustandsinformation zu erkennen, ob eine Schädigung des Ventilkegels und/oder ein Überschreiten kritischer Kavitation an dem Stellventil vorliegt.

Die Kennung, sowie möglicherweise weitere Informationen des Stellventils 3, kann beispielsweise durch ein Anzeigedisplay des Stellventils 3 ausgegeben und von einem optischen Sensor der tragbaren Diagnosevorrichtung erfasst werden. Das Display, beispielsweise ein LCD-Display, des Stellventils kann vorzugsweise einen dynamischen QR-Code (2-D-Barcode oder 3-D-Barcode) ausgeben, der die Kennung der Ist-Messwerte, eine Reihe archivierter Messwerte, einen aktuellen Betriebszustand des Stellventils, mehrere vergangene Betriebszustände des Stellventils, Umgebungs-Messwerte (Geräuschpegel, Temperatur) bezogen auf das Stellventils 3 ausgibt.

### Bezugszeichenliste

- 1: tragbare Diagnosevorrichtung
- 3: Stellventil
- 5: Luftschall
- 11: akustischer Sensor
- 13: optischer Sensor
- 15: optische Anzeige
- 17: akustische Anzeige
- 21: Kommunikationsvorrichtung 21
- 23: Nahbereichskommunikationseinrichtung
- 25: Fernkommunikationseinrichtung
- 31: Identifizierungseinrichtung
- 33: Identifikator
- 41: Nahfeld-Kommunikationseinrichtung
- 43: Stellgeräteelektronik
- 53: Rechnersystem

## Patentansprüche

1. System (100) für eine prozesstechnische Anlage, umfassend ein eine Prozessfluidströmung führendes Stellgerät, wobei das Stellgerät einen Identifikator (33) aufweist, der eine stellgeräteindividuelle Kennung repräsentiert, und eine tragbare Vorrichtung (1) zum Diagnostizieren fehlerhafter Zustände, nämlich Leckage, Kavitation und/oder Verschleiß, des Stellgeräts, wobei die Vorrichtung (1) umfasst:
eine Identifizierungseinrichtung (31) zum Erfassen der stellgeräteindividuellen Kennung;
wenigstens eine Schallsensoreinrichtung (11, 13) zum optischen und/oder akustischen kontaktfreien Erfassen von Körper- und/oder Luftschall des Stellgeräts, wobei die Schallsensoreinrichtung (11, 13) einen akustischen Sensor (11) zum Erfassen von Luftschall (5) und einen optischen Sensor (13) zum Erfassen von Körperschall aufweist;
eine Kommunikationseinrichtung (21) zum Bereitstellen einer Kommunikationsverbindung (41, 51) mit dem Körper- und/oder Luftschall abgebenden Stellgerät;
wobei die Kommunikationseinrichtung (21) eine
Nahbereichskommunikationseinrichtung (23) zum Bereitstellen einer Kommunikationsverbindung (41) mit einer Stellgeräteelektronik (43) des Körper- und/oder Luftschall abgebenden Stellgeräts aufweist;
ferner umfassend eine mit der wenigstens einen Schallsensoreinrichtung (11, 13) signalübertragungsgemäß verbundene Datenverarbeitungselektronik zum Verarbeiten von Körper- und/oder Luftschall-Messwerten und einen Datenspeicher zum Speichern zumindest der Kennung des Stellgeräts;
wobei die Datenverarbeitungselektronik dazu eingerichtet ist, mittels der Nahbereichskommunikationseinrichtung (23) von der Stellgeräteelektronik (43) stellgerätespezifische Messwerte zu empfangen;
wobei das Stellgerät eine Markierung aufweist, mittels welcher die tragbare Vorrichtung (1) zum optischen Erfassen von Körperschall auf das Stellgerät ausrichtbar ist.

2. System (100) nach Anspruch 1, wobei der optische Sensor (13) ein Laserinterferometer umfasst, das eine Lasersendeeinheit und eine Laserempfangseinheit umfasst.

3. System (100) nach Anspruch 1 oder 2, wobei die Kommunikationseinrichtung (21) eine Funkkommunikationseinrichtung ist und ein Rechnersystem (52) eine Server Datenbank oder eine Leitwarte ist, die Nahbereichskommunikationseinrichtung (23) eine Funkkommunikationseinrichtung zur Nahfeldkommunikation mittels Bluetooth, NFC, wireless HART oder WLAN, und/oder eine optische Kommunikationseinrichtung zur Nahfeldkommunikation mittels Infrarotlicht, sichtbarem Licht oder Ultraviolettlicht aufweist, wobei die Identifizierungseinrichtung (31) dazu eingerichtet ist, die Kennung des Stellgeräts mittels der Nahbereichskommunikationseinrichtung (23) von der Stellgeräteelektronik (43) zu empfangen.

4. System (100) nach einem der vorstehenden Ansprüche, wobei die Datenverarbeitungselektronik dazu eingerichtet ist, eine Signalanalyse der Körper- und/oder Luftschall-Messwerte durchzuführen und/oder mittels der Nahbereichskommunikationseinrichtung (23) von der Stellgeräteelektronik (43) stellgerätespezifische Kennwerte betreffend die Art des Stellgeräts, die Ausgestaltung des Stellgeräts oder des von dem Stellgerät geführten Prozessfluids zu empfangen, wobei die Datenverarbeitungselektronik dazu eingerichtet ist, dem Datenspeicher die empfangenen stellgerätespezifischen Kennwerte bereitzustellen.

5. System (100) nach einem der vorstehenden Ansprüche, wobei die Datenverarbeitungselektronik dazu eingerichtet ist, dem Datenspeicher die empfangenen stellgerätespezifischen Messwerte bereitzustellen, wobei die Datenverarbeitungselektronik dazu ausgelegt ist, anhand von stellgerätespezifischen Messwerten und stellgerätespezifischen Kennwerten einen Ist-Durchflusswert des Prozessfluids durch das Stellgerät zu bestimmen.

6. System (100) nach einem der vorstehenden Ansprüche, wobei die Kommunikationseinrichtung (21) eine Fernkommunikationseinrichtung (25) zum Bereitstellen einer Kommunikationsverbindung (51) mit einem entfernten Rechnersystem (53) aufweist, wobei die Datenverarbeitungselektronik dazu eingerichtet ist, mittels der Fernkommunikationseinrichtung (25) dem entfernen Rechnersystem (53) die Kennung des Stellgeräts mitzuteilen und von dem entfernten Rechnersystem (53) stellgerätespezifische Kennwerte, stellgerätespezifische Umgebungsbedingungen, stellgerätespezifische Analyseroutinen, stellgerätespezifische Analyseergebnisse und/oder eine Stellgerätezustandsinformation zu empfangen.

7. System (100) nach einem der vorstehenden Ansprüche, umfassend eine Anzeige (15) zum Darstellen einer Stellgerätezustandsinformation, wobei die Anzeige (15) der Vorrichtung (1) dazu ausgelegt ist, ein optisches und/oder akustisches Warnsignal auszugeben.

8. System (100) nach einem der vorstehenden Ansprüche, wobei das entfernte Rechnersystem (53) eine Datenbank aufweist, die stellgerätespezifische Referenzwerte, stellgerätespezifische Kenngrößen und/oder stellgerätespezifische Analyseroutinen zur Diagnose enthält, wobei das Rechnersystem dazu eingerichtet ist, eine Signalanalyse der Körper- und/oder Luftschallwerte durchzuführen.

9. System (100) nach einem der vorstehenden Ansprüche, wobei das Stellgerät eine Nahbereichskommunikationseinrichtung (23) zur Kommunikation mit der tragbaren Vorrichtung (1) aufweist, die zum Bereitstellen des Identifikators (33) des Stellgeräts an die tragbare Vorrichtung (1) eingerichtet ist, wobei das Stellgerät eine Stellgerätelektronik (43) mit einem Datenspeicher für stellgerätespezifische Kennwerte, stellgerätespezifische Messwerte und/oder stellgerätespezifische Referenzwerte aufweist und die Nahbereichskommunikationseinrichtung (23) des Stellgeräts dazu eingerichtet ist, der Vorrichtung (1) die stellgerätespezifischen Kennwerte, die stellgerätespezifischen Messwerte und/oder die stellgerätespezifischen Referenzwerte mitzuteilen.

10. Verfahren zur Diagnose fehlerhafter Zustände, nämlich Leckage, Kavitation und/oder Verschleiß, eines Körper- und/oder Luftschall abgebenden, ein Prozessfluid führenden Stellgeräts einer prozesstechnischen Anlage, wobei
- eine tragbare Vorrichtung (1) zum Diagnostizieren des prozessfluidführenden Stellgeräts verwendet wird,
- mittels der tragbaren Vorrichtung (1) eine stellgeräteindividuelle Kennung erfasst wird,
- durch wenigstens eine Schallsensoreinrichtung (11, 13) der tragbaren Vorrichtung (1) optisch und/oder akustisch Körper- und/oder Luftschallemissionswerte des Stellgeräts kontaktfrei erfasst werden, wobei die Schallsensoreinrichtung (11, 13) einen akustischen Sensor (11) zum Erfassen von Luftschall (5) und einen optischen Sensor (13) zum Erfassen von Körperschall aufweist;
- mittels einer mit der wenigstens einen Schallsensoreinrichtung (11, 13) signalübertragungsgemäß verbundenen Datenverarbeitungselektronik der tragbaren Vorrichtung (1) Körper- und/oder Luftschall-Messwerte verarbeitet werden und mittels eines Datenspeichers der tragbaren Vorrichtung (1) zumindest die Kennung des Stellgeräts gespeichert wird;
- eine Nahfeld-Kommunikationsverbindung (41) zwischen der tragbaren Vorrichtung (1) und einer Stellgerätelektronik (43) des Stellgeräts aufgebaut wird, wobei der tragbaren Vorrichtung (1) mittels der Nahfeld-Kommunikationsverbindung (41) stellgerätespezifische Messwerte von der Stellgeräteelektronik (43) mitgeteilt werden;
- das Stellgerät mit einer Markierung und einem Identifikator (33) versehen wird, der die stellgeräteindividuelle Kennung repräsentiert, wobei mittels der Vorrichtung (1) optisch Körperschall erfasst wird und mittels der Markierung die tragbare Vorrichtung (1) zum optischen Erfassen von Körperschall auf das Stellgerät ausgerichtet wird.

11. Verfahren nach Anspruch 10, wobei ferner
- stellgerätespezifische Referenz- Körper- und/oder Luftschallemissionswerte bezüglich des Stellgeräts bereitgestellt werden,
- die Ist- Körper- und/oder Luftschallemissionswerte mit Referenz- Körper- und/oder Luftschallemissionswerten verglichen werden, um eine stellgerätespezifische Zustandsinformation, wie ein Diagnoseergebnis, zu ermitteln, und/oder wobei die Nahfeld-Kommunikationsverbindung (41) eine Funkverbindungsvorrichtung ist und/oder wobei die Kennung des Stellgeräts der tragbaren Vorrichtung (1) von der Stellgeräteelektronik (43) mitgeteilt wird.

12. Verfahren nach einem der Ansprüche 10 bis 11, wobei eine Fern-Kommunikationsverbindung (51) zwischen der tragbaren Vorrichtung (1) und einem entfernten Rechnersystem (53) aufgebaut wird, und wobei von der tragbaren Vorrichtung (1) dem entfernten Rechnersystem (53) mittels der Fern-Kommunikationsverbindung (51) die Kennung des Stellgeräts mitgeteilt wird, und wobei
von der tragbaren Vorrichtung (1) mittels der Fern-Kommunikationsverbindung (51) dem entfernten Rechnersystem (53) stellgerätespezifische Kennwerte, stellgerätespezifische Messwerte und/oder Ist- Körper- und/oder Luftschallemissionswerte mitgeteilt werden, wobei mittels der Fern-Kommunikationsverbindung (51) von dem entfernten Rechnersystem (53) an die tragbare Vorrichtung (1) stellgerätespezifische Kennwerte, stellgerätespezifische Referenzwerte und/oder eine stellgerätespezifische Zustandsinformation mitgeteilt wird.

13. Verfahren nach einem der Ansprüche 10 bis 12, wobei von der tragbaren Vorrichtung (1) oder dem entfernten Rechnersystem (53) der Vergleich von Ist- Körper- und/oder Luftschallemissionswerten mit Referenz- Körper- und/oder Luftschallemissionswerten durchgeführt wird, wobei eine Signalanalyse der Ist- Körper- und/oder Luftschallemissionsmesswerte durchgeführt wird, wobei ein Vergleich der ermittelten charakteristischen frequenzabhängigen Schallintensitäten mit wenigstens einem hinterlegten Referenzspektrum durchgeführt wird, um eine stellgerätespezifische Zustandsinformation zu ermitteln und/oder wobei mittels einer Anzeige (15) der tragbaren Vorrichtung (1) stellgerätespezifische Zustandsdaten ausgegeben werden und/oder wobei mittels einer Anzeige (15, 17) der tragbaren Vorrichtung (1) ein optisches und/oder ein akustisches Warnsignal ausgegeben wird.

## Claims

1. System (100) for a process plant, comprising an actuator guiding a process fluid flow, wherein the actuator comprises an identifier (33) representing an actuator individual identifier, and a portable device (1) for diagnosing faulty conditions, namely leakage, cavitation and/or wear, of the actuator, wherein the device (1) comprises:
an identification means (31) for detecting the actuator individual identifier;
at least one sound sensor device (11, 13) for optical and/or acoustic contact-free detection of structure-borne and/or airborne sound of the actuator, wherein the sound sensor device (11, 13) comprises an acoustic sensor (11) for detecting airborne sound (5) and an optical sensor (13) for detecting structure-borne sound;
a communication device (21) for providing a communication link (41, 51) with the actuator emitting structure-borne and/or airborne sound;
wherein the communication device (21) comprises a short-range communication device (23) for providing a communication link (41) with actuator electronics (43) of the actuator emitting structure-borne and/or airborne sound;
further comprising data processing electronics signal-transmissional connected with the at least one sound sensor device (11, 13) for processing structure-borne and/or airborne sound measurement values, and a data storage for storing at least the identifier of the actuator;
wherein the data processing electronics is configured to receive actuator specific measurement values from the actuator electronics (43) by means of the short-range communication device (23);
wherein the actuator comprises a marking by means of which the portable device (1) is alignable with the actuator for optical detection of structure-borne sound.

2. System (100) according to claim 1, wherein the optical sensor (13) comprises a laser interferometer comprising a laser emitter unit and a laser receiver unit.

3. System (100) according to claim 1 or 2, wherein the communication device (21) is a radio communication device and a computer system (52) is a server database or a master display, and the short-range communication device (23) comprises a radio communication device for short-range communication via Bluetooth, NFC, wireless HART or WLAN, and/or an optical communication device for short-range communication via infrared light, visible light or ultraviolet light, wherein the identification means (31) is configured to receive the identifier of the actuator from the actuator electronics (43) by means of the short-range communication device (23).

4. System (100) according to one of the preceding claims, wherein the data processing electronics is configured to perform a signal analysis of the structure-borne and/or airborne sound measurement values and/or to receive actuator specific characteristics, relating to the actuator type, the actuator design or the process fluid guided by the actuator, from the actuator electronics (43) by means of the short-range communication device (23), wherein the data processing electronics is configured to provide the received actuator specific characteristics to the data storage.

5. System (100) according to one of the preceding claims, wherein the data processing electronics is configured to provide the received actuator specific characteristics to the data storage, wherein the data processing electronics is configured to determine an actual flow rate of the process fluid through the actuator based on the actuator specific measurement values an the actuator specific characteristics.

6. System (100) according to one of the preceding claims, wherein the communication device (21) comprises a remote communication device (25) for providing a communication link (51) with a remote computer system (53), wherein the data processing electronics is configured to communicate the identifier of the actuator to the remote computer system (53) by means of the remote communication device (25) and to receive actuator specific characteristics, actuator specific ambient conditions, actuator specific analysis routines and/or actuator condition information from the remote computer system (53).

7. System (100) according to one of the preceding claims comprising a display (15) for displaying actuator condition information, wherein the display (15) of the device (1) is configured to output an optical and/or acoustic warning signal.

8. System (100) according to one of the preceding claims, wherein the remote computer system (53) comprises a database containing actuator specific reference values, actuator specific characteristics and/or actuator specific analysis routines for diagnosis, wherein the computer system is configured to perform a signal analysis of the structure-borne and/or airborne sound values.

9. System (100) according to one of the preceding claims, wherein the actuator comprises a short-range communication device (23) for communication with the portable device (1), which is configured to provide the identifier (33) of the actuator to the portable device (1), wherein the actuator comprises actuator electronics (43) with a data storage for actuator specific characteristics, actuator specific measurement values and/or actuator specific reference values and the short-range communication device (23) of the actuator is configured to communicate the actuator specific characteristics, the actuator specific measurement values and/or the actuator specific reference values to the device (1).

10. Method for diagnosing faulty conditions, namely leakage, cavitation and/or wear, of a actuator of a process plant emitting structure-borne and/or airborne sound and guiding a process fluid, wherein
- a portable device (1) is used for diagnosing the actuator guiding the process fluid,
- an actuator individual identifier is detected by means of the portable device (1),
- structure-borne and/or airborne sound emission values of the actuator are optically and/or acoustically, contact-freely detected by means of at least one sound sensor device (11, 13) of the portable device (1), wherein the sound sensor device (11, 13) comprises an acoustic sensor (11) for detecting airborne sound (5) and an optical sensor (13) for detecting structure-borne sound;
- structure-borne and/or airborne sound measurement values are processed by data processing electronics of the portable device (1) signal-transmissional connected with the at least one sound sensor device (11, 13) and at least the identifier of the actuator is stored in a data storage of the portable device (1);
- a short-range communication link (41) is established between the portable device (1) and actuator electronics (43) of the actuator, wherein the portable device (1) is provided with actuator specific measurement values by the actuator electronics (43) by means of the short-range communication device (41);
- the actuator is provided with a marking and an identifier (33) representing the actuator individual identifier, wherein structure-borne sound is optically detected by means of the device (1) and the portable device (1) is aligned with the actuator for optically detecting structure-borne sound by means of the marking.

11. Method according to claim 10, wherein further
- actuator specific reference structure-borne and/or airborne sound emission values with respect to the actuator are provided,
- the actual structure-borne and/or airborne sound emission values are compared with the reference structure-borne and/or airborne sound emission values to determine actuator specific condition information, such as a diagnosis result, and/or
wherein the short-range communication link (41) is a radio communication device and/or wherein the identifier of the actuator is communicated to the portable device (1) by the actuator electronic (43).

12. Method according to one of the claims 10 to 11, wherein a remote communication link (51) is established between the portable device (1) and a remote computer system (53), and wherein the identifier of the actuator is communicated from the portable device (1) to the remote computer system (53) by means of the remote communication link (51), and wherein,
actuator specific characteristics, actuator specific measurement values and/or actual structure-borne and/or airborne sound emission values are communicated from the portable device (1) to the remote computer system (53) by means of the remote communications link (51), wherein actuator specific characteristics, actuator specific reference values and/or actuator specific condition information are communicated from the remote computer system (53) to the portable device (1) by means of the remote communications link (51).

13. Method according to one of the claims 10 to 12, wherein the comparison of actual structure-borne and/or airborne sound emission values with reference structure-borne and/or airborne sound emission values is carried out by the portable device (1) or the remote computer system (53), wherein a signal analysis of the actual structure-borne and/or airborne sound emission values is carried out, wherein a comparison of the determined characteristic frequency-dependent sound intensities with at least one stored reference spectrum is carried out to determine actuator specific condition information and/or wherein actuator specific condition information is displayed by means of a display (15) of the portable device (1) and/or wherein an optical and/or acoustic warning signal is put out by means of a display (15, 17) of the portable device (1).

## Revendications

1. Système (100) pour une installation technique de processus, comprenant un actionneur guidant un flux de fluide de processus, dans lequel l'actionneur présente un identificateur (33) représentant un identifiant individuel de dispositif de réglage, et un dispositif (1) pour le diagnostic d'états défectueux, notamment de fuites, de cavitation et/ou d'usure de l'actionneur, dans lequel le dispositif (1) comprend:
un moyen d'identification (31) pour la détection de l'identifiant individuel de l'actionneur ;
au moins un moyen de capteur acoustique (11, 13) pour la détection optique et/ou acoustique sans contact de bruits structurels et/ou aériens de l'actionneur, le moyen de capteur acoustique (11, 13) présentant un capteur acoustique (11) pour la détection de bruits aériens (5) et un capteur optique (13) pour la détection de bruits structurels ;
un moyen de communication (21) pour la mise à disposition d'une liaison de communication (41, 51) avec l'actionneur émettant des bruits structurels et/ou aériens ;
dans lequel le moyen de communication (21) présente un moyen de communication en champ proche (23) pour la mise à disposition d'une liaison de communication (41) avec une électronique d'actionneur (43) de l'actionneur émettant des bruits structurels et/ou aériens ;
comprenant en outre une électronique de traitement de données reliée à l'au moins un moyen de capteur acoustique (11, 13) par transmission de signaux, pour le traitement de valeurs de mesure de bruits structurels et/ou aériens et une mémoire de données destinée est enregistrée au moins l'identifiant de l'actionneur ;
dans lequel l'électronique de traitement de données est conçue pour recevoir des valeurs de mesure spécifiques à l'actionneur provenant de l'électronique d'actionneur (43) à l'aide du moyen de communication en champ proche (23) ;
dans lequel l'actionneur présente un marquage permettant d'orienter le dispositif portatif (1) vers l'actionneur pour la détection optique de bruits structurels.

2. Système (100) selon la revendication 1, dans lequel le capteur optique (13) comprend un interféromètre laser comportant une unité d'émission laser et une unité de réception laser.

3. Système (100) selon la revendication 1 ou 2, dans lequel le moyen de communication (21) est un moyen de communication radio et un système informatique (52) est une base de données de serveur ou une salle de commande, le moyen de communication en champ proche (23) présente un moyen de communication radio pour la communication en champ proche par Bluetooth, NFC, HART sans fil ou WLAN, et/ou un moyen de communication optique pour la communication en champ proche par lumière infrarouge, lumière visible ou lumière ultraviolette, dans lequel le moyen d'identification (31) est conçu pour recevoir l'identifiant de l'actionneur provenant de l'électronique d'actionneur (43) à l'aide du moyen de communication en champ proche (23).

4. Système (100) selon l'une des revendications précédentes, dans lequel l'électronique de traitement de données est conçue pour effectuer une analyse de signal des valeurs de mesure de bruits structurels et/ou aériens et/ou pour recevoir des valeurs caractéristiques spécifiques à l'actionneur concernant le type d'actionneur, la conception de l'actionneur ou du fluide de processus guidé par l'actionneur, en provenance de l'électronique d'actionneur (43), à l'aide du moyen de communication en champ proche (23), dans lequel l'électronique de traitement de données est conçue pour fournir les valeurs caractéristiques spécifiques à l'actionneur reçues à la mémoire de données.

5. Système (100) selon l'une des revendications précédentes, dans lequel l'électronique de traitement de données est conçue pour fournir les valeurs de mesure spécifiques à l'actionneur reçues à la mémoire de données, dans lequel l'électronique de traitement de données est configurée pour déterminer une valeur du débit réel du fluide de processus à travers l'actionneur à l'aide de valeurs de mesure spécifiques à l'actionneur et de valeurs caractéristiques spécifiques à l'actionneur.

6. Système (100) selon l'une des revendications précédentes, dans lequel le moyen de communication (21) présente un moyen de communication à distance (25) pour la mise à disposition d'une liaison de communication (51) avec un système informatique distant (53), dans lequel l'électronique de traitement de données est conçue pour transmettre l'identifiant de l'actionneur au système informatique distant (53) à l'aide du moyen de communication à distance (25) et pour recevoir, en provenance du système informatique distant (53), des valeurs caractéristiques spécifiques à l'actionneur, des conditions environnementales spécifiques à l'actionneur, des routines d'analyse spécifiques à l'actionneur, des résultats d'analyse spécifiques à l'actionneur et/ou des informations sur l'état de l'actionneur.

7. Système (100) selon l'une des revendications précédentes, comportant un affichage (15) pour la représentation d'une information sur l'état de l'actionneur, dans lequel l'affichage (15) du dispositif (1) est configuré pour émettre un signal d'alerte optique et/ou acoustique.

8. Système (100) selon l'une des revendications précédentes, dans lequel le système informatique distant (53) présente une base de données contenant des valeurs de référence spécifiques à l'actionneur, des grandeurs caractéristiques spécifiques à l'actionneur et/ou des routines d'analyse spécifiques à l'actionneur pour le diagnostic, dans lequel le système informatique est conçu pour effectuer une analyse de signaux des valeurs de bruits structurels et/ou aériens.

9. Système (100) selon l'une des revendications précédentes, dans lequel l'actionneur présente un moyen de communication en champ proche (23) pour la communication avec le dispositif portatif (1), laquelle est conçue pour fournir l'identificateur (33) de l'actionneur au dispositif portatif (1), dans lequel l'actionneur présente une électronique d'actionneur (43) avec une mémoire de données pour des valeurs caractéristiques spécifiques à l'actionneur, des valeurs de mesure spécifiques à l'actionneur et/ou des valeurs de référence spécifiques à l'actionneur, et le moyen de communication en champ proche (23) de l'actionneur est conçu pour transmettre les valeurs caractéristiques spécifiques à l'actionneur, les valeurs de mesure spécifiques à l'actionneur et/ou les valeurs de référence spécifiques à l'actionneur au dispositif (1).

10. Procédé pour le diagnostic d'état défectueux, notamment de fuites, de cavitation et/ou d'usure, d'un actionneur d'une installation technique de processus guidant un fluide de processus et émettant des bruits structurels et/ou aériens, dans lequel
- un dispositif portatif (1) est utilisé pour diagnostiquer l'actionneur guidant un fluide de processus,
- un identifiant individuel de l'actionneur est détecté à l'aide du dispositif portatif (1),
- par au moins un moyen de capteur acoustique (11, 13) du dispositif portatif (1) détecte des valeurs d'émission de bruits structurels et/ou aériens de façon optique et/ou acoustique, sans contact, le moyen de capteur acoustique (11, 13) présentant un capteur acoustique (11) destiné à détecter des bruits aériens (5) et un capteur optique (13) destiné à détecter des bruits structurels ;
- des valeurs de mesure de bruits structurels et/ou aériens sont traitées à l'aide d'une électronique de traitement de données du dispositif portatif (1) reliée à l'au moins un moyen de capteur acoustique (11, 13) par transmission de signaux, et au moins l'identifiant de l'actionneur est enregistrée à l'aide d'une mémoire de données du dispositif portatif (1) ;
- une liaison de communication en champ proche (41) est établie entre le dispositif portatif (1) et une électronique d'actionneur (43) de l'actionneur, des valeurs de mesure spécifiques à l'actionneur étant transmises par l'électronique d'actionneur (43) au dispositif portatif (1) à l'aide de la liaison de communication en champ proche (41) ;
- l'actionneur est doté d'un marquage et d'un identificateur (33), lequel représente l'identifiant individuel de dispositif de réglage, le dispositif (1) permettant de détecter des bruits structurels de façon optique et le marquage permettant d'orienter le dispositif portatif (1) vers l'actionneur pour la détection optique de bruits structurels.

11. Procédé selon la revendication 10, dans lequel, en outre
- des valeurs d'émission de bruits structurels et/ou aériens de référence spécifiques à l'actionneur sont produites pour l'actionneur,
- les valeurs actuels d'émission de bruits structurels et/ou aériens sont comparées avec des valeurs d'émission de bruits structurels et/ou aériens de référence, pour déterminer une information d'état spécifiques à l'actionneur, telle qu'un résultat de diagnostic, et/ou dans lequel la liaison de communication en champ proche (41) est un moyen de communication radio et/ou dans lequel l'identifiant de l'actionneur est un moyen de communication radio et/ou dans lequel l'identifiant de l'actionneur du dispositif portatif (1) est transmis par l'électronique d'actionneur (43).

12. Procédé selon l'une des revendications 10 à 11, dans lequel une liaison de communication à distance (51) est établie entre le dispositif portatif (1) et un système informatique distant (53), et dans lequel l'identifiant de l'actionneur est transmis par le dispositif portatif (1) au système informatique distant (53) à l'aide de la liaison de communication à distance (51), et dans lequel
- le dispositif portatif (1) transmet des valeurs caractéristiques spécifiques à l'actionneur, des valeurs de mesure spécifiques à l'actionneur et/ou des valeurs d'émission de bruits structurels et/ou aériens au système informatique distant (53) à l'aide de la liaison de communication à distance (51), dans lequel des valeurs caractéristiques spécifiques à l'actionneur, des valeurs de référence spécifiques à l'actionneur et/ou une information d'état spécifique à l'actionneur sont transmises du système informatique distant (53) au dispositif portatif (1) à l'aide de la liaison de communication à distance (51).

13. Procédé selon l'une des revendications 10 à 12, dans lequel le dispositif portatif (1) ou le système informatique distant (53) effectue une comparaison entre des valeurs d'émission actuels de bruits structurels et/ou aériens et des valeurs d'émission de bruits structurels et/ou aériens de référence, dans lequel une analyse de signaux est effectuée pour les valeurs d'émission de bruits structurels et/ou aériens actuels, dans lequel une comparaison est effectuée entre les intensités de bruit dépendantes de la fréquence caractéristiques déterminées et au moins un spectre de référence enregistré, afin de déterminer une information d'état spécifique à l'actionneur, et/ou dans lequel un affichage (15) du dispositif portatif (1) fournit des données d'état spécifiques à l'actionneur, et/ou dans lequel un affichage (15, 17) du dispositif portatif (1) est émet un signal d'alerte optique et/ou acoustique.
